(19) **Europäisches Patentamt**

**European Patent Office**

**Office européen des brevets**

(11) **EP 1 079 158 A2**

(12) **EUROPÄISCHE PATENTANMELDUNG**

(43) Veröffentlichungstag:
28.02.2001 Patentblatt 2001/09

(51) Int. Cl.⁷: **F16K 31/00**, H01L 41/00, F02M 51/06

(21) Anmeldenummer: 00118017.3

(22) Anmeldetag: 22.08.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: 24.08.1999 DE 19940056

(71) Anmelder:
**SIEMENS AKTIENGESELLSCHAFT**
**80333 München (DE)**

(72) Erfinder:
• **Mock, Randolf, Dr.**
 **81739 München (DE)**
• **Kappel, Andreas, Dr.**
 **85649 Brunntal (DE)**
• **Gottlieb, Bernhard, Dr.**
 **81739 München (DE)**
• **Meixner, Hans, Prof. Dr.**
 **85540 Haar (DE)**
• **Fischer, Bernhard**
 **84513 Töging (DE)**
• **Chemisky, Eric**
 **85540 Haar (DE)**

(54) **Dosiervorrichtung und Verfahren zur Dosierung**

(57) Die Dosiervorrichtung weist auf

ein Gehäuse (1) mit einer Dosieröffnung, die mittels einer Verschiebung einer Ventilnadel (3) steuerbar ist,

einen in axialer Richtung längenveränderbaren elektromechanischen Aktor (8), der innerhalb einer druckbefüllbaren Arbeitskammer (16) des Gehäuses (1) angebracht ist, und der an seiner einen Stirnseite mit der Ventilnadel (3) und an seiner anderen Stirnseite mit einem axialverschiebbaren Hydraulikkolben (10) verbunden ist,

eine Hydraulikkammer (13), die durch eine erste Passung (11) zwischen Hydraulikkolben (10) und Gehäuse (1) mit der Arbeitskammer (16) gedrosselt hydraulisch verbunden ist, wobei die erste Passung (11) so ausgelegt ist, daß bei einer schnellen Längenänderung des Aktors (8) der Hydraulikkolben (10) relativ zum Gehäuse (1) feststeht,

dadurch gekennzeichnet, daß

die Hydraulikkammer (13) durch die erste Passung (11) hindurch über die Arbeitskammer (16) druckbefüllbar ist.

FIG 1

EP 1 079 158 A2

## Beschreibung

Die Erfindung betrifft eine Dosiervorrichtung mit einem elektromechanischen Aktor, der eine Ventilnadel antreibt, und ein Verfahren zum Betreiben desselben.

Bei einer Dosiervorrichtung mit einem elektromechanischem Aktor als Antriebselement muß darauf geachtet werden, daß

- der Aktor gegenüber dem zu dosierenden Fluid geschützt ist,
- eine Zugspannung am Aktor vermieden wird,
- vorhandene Dichtelemente eine hohe mechanische Nachgiebigkeit in Bewegungsrichtung aufweisen, so daß eine Längenkompensation zum Ausgleich thermischer oder druckbedingter Längenänderungen nicht behindert wird,
- eine hinreichende Druckfestigkeit der Dichtelemente gegeben ist,
- eine geeignete Kompensation druckbedingter Kräfte und/oder thermischer und/oder durch Alterungs- und Setzeffekte bedingter Kräfte bzw. Längenänderungen, zum Beispiel auf eine Ventilnadel, gegeben ist,
- eine hohe Zuverlässigkeit der Dichtelemente hinsichtlich einer Leckage garantiert ist,
- eine hydraulische Längenkompensation im typischen Temperaturintervall von -40° bis +150° Celsius gewährleistet ist.

Beispielsweise wirkt aufgrund einer druckbelasteten Fläche eines Ventiltellers eines nach außen öffnenden Dosierventils bei einem hohen Fluiddruck eine hohe in Öffnungsrichtung wirkende Druckkraft, welche zu einer Leckage des zu dosierenden Fluids nach außen führt.

Aus DE 43 06 072 C2 ist eine nach außen öffnende Dosiervorrichtung bekannt, bei der ein Piezoaktor eine Ventilnadel über eine Hydraulikkammer hubtibersetzt antreibt. Der Piezoaktor ist in einer separaten Kammer untergebracht und durch O-Ringe gegenüber der Hydraulikflüssigkeit abgedichtet. Der Piezoaktor wird mittels einer Tellerfeder unter einer Druckvorspannung gehalten und stützt sich dazu am Gehäuse ab.

Aus DE 43 06 073 C1 ist ein nach innen öffnendes Einspritzventil bekannt, bei dem der Aktor ebenfalls in einem separaten Raum untergebracht ist und gegenüber den verwendeten Flüssigkeiten durch Abdichtringe abgedichtet ist. Auch hier wird der Piezoaktor am Gehäuse abgestützt und mittels einer Tellerfeder druckvorgespannt. Eine Dehnung des Aktors wird über einen Kolben-in-Kolben-Antrieb mit Hubumkehr in einen Hub einer Ventilnadel umgesetzt.

Aus EP 0 218 895 B1 ist ein Zumeßventil zur Dosierung von Flüssigkeiten oder Gasen bekannt, bei dem sich ein Vielschicht-Piezoaktor innerhalb eines Kraftstoff befüllten Bohrungsabschnitts befindet, und eine Endfläche des Piezoaktors mit einer nach außen öffnenden Ventilnadel verbunden ist, während das andere Ende des Piezoaktors mit einem Dämpfungskolben verbunden ist, welcher einen Dämpfungsraum begrenzt. Der Dämpfungsraum ist über mindestens einen Drosselspalt mit einem Ausgleichsraum verbunden, wobei das vom Dämpfungsraum, Drosselspalt und Ausgleichsraum zur Verfügung gestellte Volumen flüssigkeitsgefüllt und hermetisch abgeschlossen ist.

Es ist eine Aufgabe der vorliegenden Erfindung, eine Möglichkeit zur Dosierung bereitzustellen, welche eine langsame Längenkompensation auf einfache Weise realisiert.
Es ist eine weitere Aufgabe, eine Möglichkeit zur Dosierung mit einer einfachen Kompensation druckbedingter Kräfte bereitzustellen.
Es ist auch eine Aufgabe, eine Möglichkeit zur Dosierung mit einer schnellen Schaltmöglichkeit bereitzustellen.

Diese Aufgabe wird durch eine Dosiervorrichtung gemäß Patentanspruch 1 sowie mittels eines Verfahrens gemäß Patentanspruch 9 gelöst. Vorteilhafte Ausgestaltungen sind den Unteransprüchen entnehmbar.

Dazu weist die Dosiervorrichtung ein Gehäuse mit einer Dosieröffnung auf, wobei die Größe der Dosieröffnung mittels einer Verschiebung einer Ventilnadel steuerbar ist.

Weiterhin ist ein in axialer Richtung längenveränderbarer elektromechanischer Aktor vorhanden, welcher innerhalb einer druckbefüllbaren Arbeitskammer des Gehäuses angebracht ist. Unter einem elektromechanischem Aktor wird ein Aktor verstanden, bei dem durch Anlegen eines elektrischen Signals, zum Beispiel einer Spannung oder eines Stroms, eine Dehnung eines Materialvolumens erreicht wird. Ein typischer elektromechanischer Aktor ist ein elektrostriktiver, ein magnetostriktiver oder ein piezoelektrischer Aktor, insbesondere einen Vielschicht-Piezoaktor.

Der Aktor ist weiterhin mit mindestens einem Teil seiner einen Stirnseite mit der Ventilnadel und mit mindestens einem Teil seiner anderen Stirnfläche mit einem axial verschiebbaren Hydraulikkolben verbunden. Als Stirnseite wird eine in Bewegungsrichtung projizierten Fläche des Aktors beschrieben, z. B. die Endfläche eines zylindrischen Aktors bei hauptsächlicher Dehnung in Längsrichtung. Der Hydraulikkolben ist entlang der hauptsächlichen Ausdehnungsrichtung des Aktors verschiebbar.

Durch den Hydraulikkolben wird die Arbeitskammer von einer Hydraulikkammer getrennt, wobei die Hydraulikkammer mit der Arbeitskammer durch eine erste Passung zwischen Hydraulikkolben und Gehäuse gedrosselt fluidisch verbunden ist. Im einfachsten Fall ist dabei der Hydraulikkolben zylindrisch in einer Bohrung eingebracht und unterteilt diese Bohrung in die Hydraulikkammer und die Arbeitskammer.

Die erste Passung bzw. der Arbeitskolben ist so ausgelegt, daß eine schnelle Bewegung des Piezoaktors nicht zu einer Bewegung des Hydraulikkolbens relativ zum Gehäuse führt.

Dabei ist eine schnelle Bewegung dahingehend zu verstehen, daß darin die typischen Stellvorgänge des Aktors umfaßt sind, beispielsweise eine Längenänderung zur Verschiebung der Ventilnadel. Ein typischer Steilvorgang eines Piezoaktors in einer Dosiervorrichtung dauert nicht länger als 100 ms, bei einem Kraftstoffeinspritzer z. B. nicht länger als 5 ms. Die Dosiervorrichtung ist selbstverständlich nicht auf diese Zeitspanne festgelegt, sondern bezieht sich, unter anderem bei anderen Anwendungen, auf eine anwendungsbezogene typische Zeitdauer eines Stellvorgangs.

Diese Steifigkeit der Hydraulikkammer bei einem schnellen Stellvorgang wird dadurch bewirkt, daß die Passung so eng gewählt ist, daß während eines Stellvorgangs kein signifikantes Volumen aus der Hydraulikkammer ausfließen kann. Dadurch wird die Bewegung des Hydraulikkolbens hauptsächlich durch die Kompressibilität des Fluids in der Hydraulikkammer bestimmt. Wegen der im allgemeinen hohe Kompressibilität von Flüssigkeiten verhält sich die Hydraulikkammer also sehr steif, und verhindert weitestgehend eine Bewegung des Hydraulikkolbens.

Demgegenüber wird bei einer im Vergleich zum Stellvorgang langsamen Bewegung des Hydraulikkolbens eine signifikante Menge des Fluids durch die Passung aus der Hydraulikkammer abgegeben. Dadurch wird ein der Bewegung des Hydraulikkolbens entgegenwirkender Druckaufbau in der Hydraulikkammer weitgehend verhindert, und der Hydraulikkolben kann in Richtung der Hydraulikkammer verschoben werden.
Eine langsame Verschiebung des Hydraulikkolbens wird beispielsweise durch eine Änderung der druckbedingten Kräfte am Aktor und/oder an mit dem Aktor verbundenen Bauteilen, z. B. der Ventilnadel, bewirkt. Auch bedingen durch thermische Effekte oder Setzeffekte bedingte Längenänderungen eine langsame Verschiebung des Hydraulikkolbens. Beispielsweise liegt eine typische Zeitdauer für eine signifikante thermische Längenänderung im Bereich von Sekunden, diese sind also in der Regel mehr als 10 bis 100 Mal langsamer als die Stellvorgänge des Aktors (< 100 ms, besonders < 5 ms).

Die Dosiervorrichtung weist weiterhin das Merkmal auf, daß die Hydraulikkammer durch die erste Passung hindurch über die Arbeitskammer druckbefüllbar ist. Dies ist gleichbedeutend damit, daß eine gedrosselte hydraulische Verbindung zwischen einem Mittel zur Fluidbefüllung der Arbeitskammer und der Hydraulikkammer besteht. Die Hydraulikkammer ist also mit dem in der Arbeitskammer vorhandenen Fluid befüllt. Diese offene Konstruktion der Hydraulikkammer steht im Gegensatz zu hydraulisch abgeschlossenen Dämpfungssystemen, welche meist eine spezielle Flüssigkeit zur Dämpfung vorsehen, siehe beispielsweise EP 0 218 895 B1.

Diese Dosiervorrichtung besitzt den Vorteil, daß eine langsame Längenänderung des Aktors oder damit mechanisch zusammenhängender Bauteile wie der Ventilnadel sowie des Gehäuses selbsttätig ausgleichbar sind. Zu diesen Längenänderungen gehören druckbedingte Längenänderungen, thermische Längenänderungen oder durch Setzeffekte bedingte Längenänderungen.

Diese Eigenschaften erlauben es, in der Materialwahl auf teuere Legierungen mit geringer thermischer Dehnung (zum Beispiel Invar) zu verzichten und zu wesentlich preiswerterem Stahl mit höherer Festigkeit und einfacherer Bearbeitbarkeit überzugehen.

Aufgrund der hydraulischen Verbindung zwischen Hydraulikkammer und druckbeaufschlagter Arbeitskammer ergibt sich der Vorteil, daß das Innere der Hydraulikkammer druckbeaufschlagbar ist. Dadurch kann diese kurzfristig sehr hohe Zugkräfte aufnehmen, wie sie zum schnellen Schließen der Dosieröffnung benötigt werden. Dadurch kann ein Schließvorgang schneller, als bei einer gewöhnlichen Rückstellung durch eine Rückstellfeder durchgeführt werden, typischerweise 5 bis 10 Mal so schnell. Gleichzeitig wird ein Hubverlust durch eine Dehnung der Ventilnadel aufgrund einer hohen durch eine Rückstellfeder aufgebrachten Rückstellkraft vermieden.

Weiterhin ergibt sich der Vorteil einer Vermeidung von Spaltflächen und der damit verbundenen Spaltverluste im Ventilnadelantrieb.

Es ist vorteilhaft, wenn der elektromechanische Aktor ein Vielschicht-Piezoaktor ist. Dieser ist betriebssicher, kann präzise Stellwege bei gleichzeitig hoher Kraftaufbringung erzeugen und ist vergleichsweise klein.

Der Aktor kann geschützt oder ungeschützt in der Arbeitskammer angebracht sein. Dabei ist die Notwendigkeit einer Schutzhülle für den Aktor vor allem von seiner Verträglichkeit mit dem eingesetzten Fluid bestimmt.

Zur Vermeidung einer Beschädigung des Aktors durch das Fluid, zum Beispiel durch Korrosion, ist es vorteilhaft, wenn der Aktor durch eine in axialer Richtung flexibler Ummantelung von der Arbeitskammer getrennt ist. Die Druckvorspannung auf den Aktor wird dann hydraulisch aufgebracht. Dadurch ergibt sich gegenüber einer Druckvorspannung mittels einer Rohrfeder der Vorteil, daß kein Übertragungsverlust in der Auslenkung des Aktors verursacht wird, weil die hydraulische Kraft nicht von der Auslenkung des Aktors abhängt.

Anwendbar als Ummantelung sind beispielsweise Plastik- oder Metallfolien oder Plastikbälge.

Es ist besonders vorteilhaft, wenn die Ummantelung ein Metallbalg ist, weil dadurch zwischen Aktor und Metallbalg ein druckloser oder nur unter einem geringen Druck stehender Aktorraum gebildet wird. Der Metallbalg schützt unter anderem vor Kraftstoff, z. B. Benzin oder Diesel.

Bei einer Anordnung mit Metallbalg wird dieser vorzugsweise mit dem Hydraulikkolben und einer an der anderen Stirnseite des Piezoaktors angebrachten Bodenplatte verschweißt, so daß der Aktor unter einer günstigen mechanischen Druckvorspannung steht. Allerdings ist aufgrund der hohen Flexibilität des Metallbalgs in axialer Richtung der Aktor häufig nicht genug druckvorgespannt, um sicher vor einer Zugspannung im dynamischen Betrieb geschützt zu sein. Die Sicherheit vor einer schädlichen Zugspannung in gesamten Arbeitsbereich wird durch die oben beschriebene Druckbeaufschlagung der Arbeitskammer erreicht.

Die Schweißnähte sind sinnvollerweise hermetisch dichtend ausgeführt, so daß der Aktor zuverlässig gegenüber dem Kraftstoff geschützt ist.

Es ist weiterhin vorteilhaft, wenn der Hydraulikkolben in einer gestuften Bohrung axialverschiebbar angeordnet ist, wobei er im Bohrungsabschnitt mit weitem Durchmesser durch die erste Passung führbar ist und im Bohrungsabschnitt mit reduziertem Durchmesser durch eine zweite Passung mit dem Gehäuse führbar ist. Mittels der zweiten Passung kann die Hydraulikkammer zusätzlich druckbeaufschlagbar sein. Bei einer rotationssymmetrischen Ausführung von Gehäuse und Hydraulikkolben entsteht durch diese Ausgestaltung eine ringförmige Hydraulikkammer. Mittels einer Dimensionierung des zweiten Durchmessers und des reduzierten Durchmessers bzw. der jeweiligen Spaltbreiten läßt sich der Fluidstrom in und aus der Hydraulikkammer bevorzugt einstellen.

Besonders bevorzugt wird eine Dosiervorrichtung, bei der der elektromechanische Aktor ein Vielschicht-Piezoaktor ist und die Ventilnadel über eine Bodenplatte mit der ersten Stirnseite des Aktors verbunden ist. Dadurch werden die Stirnseiten des Aktors vor schädlicher Rißbildung insbesondere im dynamischen Betrieb geschützt.

Als weiterer Vorteil ist die Dosieröffnung mittels der Ventilnadel durch Aufsatz von außen dichtend verschließbar. Bei einer nach außen öffnenden Dosiervorrichtung ergibt sich der Vorteil einer im Vergleich zu einem nach innen öffnenden Ventilen eine einfache Konstruktion, da der Hub des Aktors und der Hub der Ventilnadel im Betrieb gleichgerichtet sind. Zum Beispiel entfällt eine aufwendige Kolben-in-Kolben-Lösung zur Hubumkehr.

Ein zum Beispiel aus DE 43 06 072 C2 geläufiges Beispiel für eine Ausarbeitung der Ventilnadel ist der Aufsatz der an ihrem die Dosieröffnung verschließenden Ende mit einem Ventilteller ausgerüsteten Ventilnadel auf einen Dichtsitz, wobei die vom Ventilsitz begrenzte Dosieröffnung mit einem druckbeaufschlagten Raum verbunden ist.

Insbesondere zur Einspritzung von Kraftstoff in einen Verbrennungsmotor ist eine Dosiervorrichtung günstig, bei der der Vielschicht-Piezoaktor innerhalb eines Metallbalgs untergebracht ist, welcher an der Bodenplatte und am gestuft ausgeführten Hydraulikkolben dichtend befestigt ist.

Die Verwendung des Metallbalgs ist vorteilhaft, weil die meisten eingesetzten Kraftstoffe schädlich für den Piezoaktor sind. Weiterhin ist durch den bei der Kraftstoffeinspritzung notwendigen hohen Kraftstoffdruck von bis zu 300 bar die nötige hydraulische Druckvorspannung des Aktors gegeben.

Es wird auch ein Federelement, z. B. eine oder mehrere Tellerfedern, eingesetzt, welches den Piezoaktor unter eine zusätzliche Druckvorspannung hält, was besonders beim Anfahren der Dosiervorrichtung günstig ist.

Insbesondere ist diese Dosiervorrichtung geeignet zur Verwendung zur Direkteinspritzung in einem Magermotor.

Es wird bevorzugt, wenn die axiale Höhe hk der Hydraulikkammer zwischen 100 μm und 500 μm beträgt.

Die Dosiervorrichtung wird zweckmäßigerweise so betrieben, daß zur Einleitung eines Dosiervorgangs der Piezoaktor durch ein von außen über elektrische Anschlüsse aufgegebenes elektrisches Signal elongiert wird. Wie oben beschrieben, ist die Zeitdauer des Stellvorgangs so gering, daß sich die Hydraulikkammer sehr steif verhält und somit den Piezoaktor ohne signifikanten Hubverlust abstützt. Die Elongation des Piezoaktors wird über die Bodenplatte auf die Ventilnadel übertragen, welche entsprechend verschoben wird. Dadurch wird die Ventilnadel von der Dosieröffnung abgehoben, welche sie vorher dichtend verschlossen hat. Aus der Arbeitskammer wird daraufhin Fluid über die geöffnete Dosieröffnung nach außen abgegeben.

In der Regel wird die Ventilnadel in einer in die Arbeitskammer mündenden Bohrung geführt, wobei die Passung zwischen Ventilnadel und Gehäuse weit, das heißt im wesentlichen ungedrosselt, ist. Bei dieser Anordnung wird somit Fluid aus der Arbeitskammer über die weite Passung zwischen Ventilnadel und Gehäuse zur Dosieröffnung und danach nach außen geleitet.

Zur Beendigung des Dosiervorgangs wird der Piezoaktor entladen und mindestens durch die Zugspannung des Metallbalgs und des hydraulischen Drucks des Fluids in der Arbeitskammer kontrahiert. Ist außerdem ein Federelement in der Arbeitskammer vorhanden, welches eine zusätzliche Druckvorspannung auf den Piezoaktor ausübt, so wird dieser auch durch das Federelement zurückgestellt. Ohne diese externen Mittel zur Druckvorspannung könnte es beim Rückstellvorgang zu einer schädlichen Zugspannung im Piezoaktor und möglicherweise zu einer Zerstörung des Piezoaktors kommen.

Durch die Kontraktion des Piezoaktors wird die Ventilnadel wieder zurückgestellt, so daß sie dichtend auf die Dosieröffnung aufsetzt und so eine Abgabe von Fluid beendet wird.

Weil die Arbeitskammer kontinuierlich druckbeaufschlagt wird, wird sie bei einem Fluidverlust wieder aufgefüllt, so daß sich nach einer kurzen Zeit die vor Auslösung des Stellvorgangs vorhandenen Parameter wie Druck in der Arbeitskammer, wieder einstellen.

Durch den Druck ist auch einen kurzfristige Übertragung von Zugspannungen zur schnellen Rückstellung möglich.

Die Dosiervorrichtung ist nicht auf eine Einspritzung in einen Brennraum beschränkt, sondern kann allgemein für Dosiervorgänge, beispielsweise zur medizinischen Dosierung, in einer Herstellungsanlage, zur Besprühung von Oberflächen oder zur Markierung etc. eingesetzt werden.

Weiterhin ist diese Dosiervorrichtung nicht auf eine bestimmte Klasse von Fluiden eingeschränkt, allerdings werden zur Kraftstoffeinspritzung Benzin, Diesel, Kerosin, Alkohol oder flüssiges Erdgas bevorzugt.

In den folgenden Ausführungsbeispielen wird die Dosiervorrichtung schematisch näher erläutert.

Figur 1 zeigt ein direkt angetriebenes, nach außen öffnendes Einspritzventil,
die Figuren 2a und 2b zeigen Prinzipskizzen zur Definition von in dieser Beschreibung verwendeten Größen.

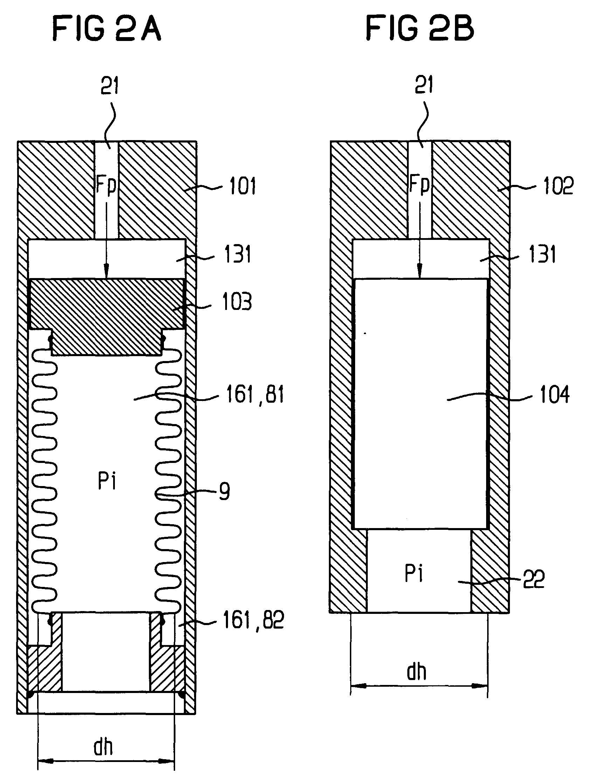

Figur 2a zeigt als Seitenansicht in Schnittdarstellung ein Gehäuse 101, welches einen in einer Bohrung axialverschiebbar angeordneten Hydraulikkolben 103 enthält. Durch den Hydraulikkolben 103 wird eine Bohrung des Gehäuses in eine Hydraulikkammer 131 und eine Arbeitskammer 161 unterteilt. Im Arbeitsraum 161 ist der Hydraulikkolben 103 durch einen bezüglich der Längsachse der Bohrung rotationssymmetrischen Metallbalg 9 mit dem Gehäuse 101 verbunden. Durch den Metallbalg 9 wird die Arbeitskammer 161 wiederum in einen Aktor-Innenraum 81 und in einen Aktor-Außenraum 82 unterteilt.

Über eine Zuleitung 21 wird der Hydraulikraum 131 und dadurch durch eine Passung zwischen Hydraulikkolben 103 und Gehäuse 101 der Aktor-Außenraum 82 mit einem Druck pA beaufschlagt. In diesem Ausführungsbeispiel ist keine weitere Zuleitung zum Aktor-Außenraum 82 gegeben.

Der vom Aktor-Außenraum 82 abgetrennte Aktor-Innenraum 81 stehe unter einem Druck pI, wobei gelte pI ≠ pA. Dadurch wirkt auf den Metallbalg 9 die Druckkraft Fp, welche für den Fall pA > pI den Metallbalg 9 komprimiert. Die auf den Hydraulikkolben 103 ausgeübte Kraft Fp entspricht also der Vektoraddition der auf die Oberfläche des Hydraulikkolbens 103 wirkenden Kräfte.

In diesem Ausführungsbeispiel ist der Hydraulikkolben 103 gestuft mit einem größeren Durchmesser und einem kleineren Durchmesser ausgeführt, wobei der Metallbalg 9 einerseits an der Außenseite des Hydraulikolbens 103 am kleineren Durchmesser angebracht ist und andererseits bei gleichem Durchmesser an einer umlaufenden Nase des Gehäuses 1.

Der hydraulische Durchmesser dh bzw. der hydraulische Querschnitt Ah (auch wirksamer Balgquerschnitt genannt) ergibt sich aus der Kraft Fp nach der Formel

$$Fp = \Pi \cdot dh^2 /4 \cdot (pA - pI) = Ah \cdot (pA - pI). \quad (1)$$

Dabei gilt unter der Bedingung pA > pI im allgemeinen dh > kleinerer Durchmesser des Hydraulikolbens 103. Dies liegt unter anderem daran, daß die Wellen der Metallbalgs 9 durch die Druckdifferenz in axialer Richtung zusammengedrückt werden.

Eine weitere Beschreibung des hydraulischen Querschnitts Ah wird in: Witzenmann GmbH: Metallbälge, 1997, Seiten 82 und 101, gegeben.

Selbstverständlich gelten die gleichen Zusammenhänge auch für andere Ausführungen von Bälgen, z. B. Plastikbälge.

In Figur 2b ist der in Bezug auf das Kräftegleichgewicht zu Figur 2a analoge Fall eines Hydraulikkolbens 104 gegeben, welcher aber nun auf der der Hydraulikkammer 103 abgewandten Seite nicht mit einem Metallbalg 9 verbunden ist, sondern auf einem zweiten Zulauf 22 aufliegt, wobei der zweite Zulauf 22 unter einem Druck pI steht. Der Hydraulikkolben 104 weist einen hydraulischen Durchmesser dh auf.

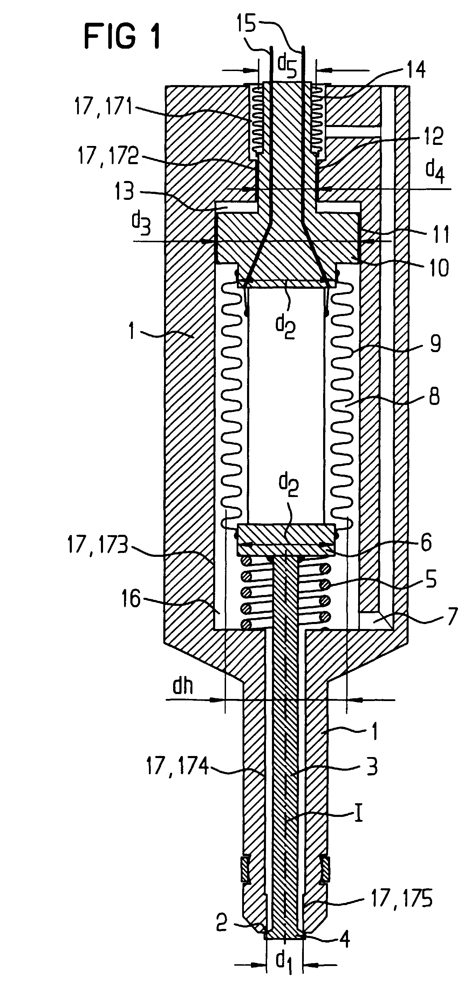

Figur 1 zeigt als Schnittdarstellung in Seitenansicht eine Dosiervorrichtung in Form eines nach außen öffnenden Kraftstoff-Direkteinspritzer in Ruhestellung.

Das Gehäuse 1 ist weitgehend rotationssymmetrisch und es ist um seine Längsachse I zentrisch mit einer durchgängigen Bohrung 17 versehen, welche innerhalb des dargestellten Bereichs bezüglich ihres Durchmessers fünffach abgestuft ist.

Innerhalb eines dritten Bohrungsabschnitts 173 ist ein elektromechanischer Aktor 8 in Form eineszylinderförmigen Vielschicht-Piezoaktors 8 eingebracht, dessen Längsachse auf der Längsachse I des Einspritzers liegt. An einer ersten Stirnseite des Piezoaktors 8 ist ein Hydraulikkolben 10 angebracht, welcher im dritten Bohrungsabschnitt 173 axialverschiebbar geführt wird. Durch den Hydraulikkolben 10 wird der dritte Bohrungsabschnitt 173 in eine Arbeitskammer 16 und eine Hydraulikkammer 13 unterteilt.

Der Hydraulikkolben 10 weist bezüglich der Längsachse I innerhalb des dritten Bohrungsabschnitts 173 einen maximalen Durchmesser d3 auf, so daß sich eine enge erste Passung 11 zwischen Hydraulikkolben 10 und drittem Bohrungsabschnitt 173 ergibt, so daß eine gedrosselte hydraulische Verbindung zwischen der Arbeitskammer 16 und der Hydraulikkammer 13 besteht.

Auf seiner dem Hydraulikkolben 10 abgewandten zweiten Stirnseite des Piezoaktors 8 liegt eine Bodenplatte 6 mit Durchmesser d2 auf. An der dem Piezoaktor 8 abgewandten Fläche der Bodenplatte 6 ist eine Ventilnadel 3 angelenkt, hier: angeschweißt, welche zumindest teilweise mit weiter Passung im vierten Bohrungsabschnitt 174 sowie dem fünften Bohrungsabschnitt 175 axialverschiebbar angeordnet ist. Der Durchmesser d2 der Bodenplatte 6 entspricht dem Durchmesser d2 des Hydraulikkolbens 10 am Piezoaktor 8.

Der Piezoaktor 8 ist von einem in Längsrichtung flexiblen Metallbalg 9 mit hydraulischem Durchmesser dh umgeben, welcher einerseits mit dem Durchmesser d2 an der Außenseite des Hydraulikkolbens 10 und andererseits mit gleichem Durchmesser an der radikalen Außenfläche der Endplatte 6 angeschweißt ist. Die Schweißung ist hydraulisch dicht, so daß der Piezoaktor 8 von der Arbeitskammer 16 getrennt ist. Ohne Druckbeaufschlagung der Arbeitskammer 16 befindet sich der Innenraum des Metallbalgs 9 mit dem Piezoaktor 8 typischerweise auf Atmosphärendruck und ist mit Luft oder einem inerten Gas, z. B. einem Schweißgas, gefüllt.

In der Arbeitskammer 16 ist auch ein Federelement 5 vorhanden, beispielsweise eine Tellerfeder oder eine Spiralfeder, welche sich einerseits am Gehäuse 1 und andererseits an der dem Piezoaktor abgewandten Endfläche der Bodenplatte 6 abstützt. Dadurch wird der Piezoaktor 8 druckvorgespannt. Der Arbeitsraum 16 ist weiterhin mittels einer Fluidzuleitung 7 mit einem Fluid, hier: Benzin, druckbeaufschlagbar. Die Fluidzuleitung 7 ist beispielsweise an eine Kraftstoff-Hochdruckpumpe angeschlossen.

Das der Bodenplatte 6 entgegengesetzte Ende der Ventilnadel 3 ist in Form eines Ventiltellers 4 ausgearbeitet. Der Piezoaktor 8 ist kontrahiert, wobei der Ventilteller 4 auf einem Ventilsitz 2 des Gehäuses 1 aufsitzt. Zur vereinfachenden Darstellung ist der Ventilsitz 2 als Rand des fünften Bohrungsabschnittes 175 nach außen mit Durchmesser d1 (typischerweise d1 = 3 mm bis 5 mm) dargestellt.

Durch Aufsatz des Ventiltellers 4 auf dem Dichtsitz 2 ist die durch die Passung zwischen Ventilnadel 3 und dem Rand des fünften Bohrungsabschnittes 175 gebildete Dosieröffnung durch Aufsatz von außen verschließbar. Ist diese Dosieröffnung geöffnet, so kann Fluid aus der Zuleitung 7 über die Arbeitskammer 16 und die Passung zwischen Ventilnadel 3 und viertem Bohrungsabschnitt 174 sowie zwischen Ventiladel 3 und fünften Bohrungsabschnitt 175 dosiert nach außen abgegeben werden.

Der Hydraulikkolben 10 ist außer durch die erste Passung 11 auch durch eine zweite Passung 12 zwischen ihm und dem zweiten Bohrungsabschnitt 172 gegeben, wobei der Durchmesser d4 des Hydraulikkolbens 10 innerhalb des zweiten Bohrungsabschnittes 172 kleiner als $d_3$ ist. Durch diese Ausführung ist die Hydraulikkammer 13 ringförmig ausgebildet.

Innerhalb des ersten Bohrungsabschnitts 171 ist der Hydraulikkolben 10 in einen zweiten Metallbalg 14 mit hydraulischem Durcjmesser d5 eingelassen. Der zweite Metallbalg 14 ist mit seinem einem Ende am Hydraulikkolben 10 angeschweißt und mit seinem anderen Ende am Gehäuse 1, so daß eine hydraulisch gedrosselte Verbindung zwischen der Hydraulikkammer 13 und der Außenseite des zweiten Metallbalgs 14 besteht. Die Außenseite des zweiten Metallbalgs 14 wird über eine erste Abzweigung der Kraftstoffzuleitung 7 zusätzlich druckbeaufschlagt. Dadurch wird die Hydraulikkammer 13 einerseits über die Arbeitskammer 16 und die erste Passung 11 und andererseits über die zweite Passung 12 gedrosselt druckbeaufschlagt.

Die elektrischen Anschlüsse 15 zur Steuerung des Vielschicht-Piezoaktors 8 in Niedervolttechnik werden von außen durch den Hydraulikkolben 10 zum Aktor 8 geführt.

Der Verschluß der Dosieröffnung wird im Ruhezustand ohne Druckbeaufschlagung der Arbeitskammern durch das gespannte Federelement 5 gewährleistet, sowie, typischerweise zu einem kleineren Teil, durch die Zugkräfte innerhalb des Metallbalgs 9. Ein typischer über die Fluidzuleitung 7 angelieferter Druck pK des Fluids, insbesondere von Benzin, beträgt 100 bar bis 300 bar. Durch den Druck pK des Fluids wirken auf die Bodenplatte 6, den Metallbalg 9 und den Hydraulikkolben 10 Druckkräfte, die den Piezoaktor 8 unter eine auch für einen dynamischen Betrieb hinreichend große Druckvorspannung setzen. Eine typische Druckkraft FD auf den Piezoaktor 8 ergibt sich nach

$$FD = pK \cdot \Pi \cdot (dh^2 - d5^2)/4, \qquad (2)$$

entsprechend einer Druckkraft FD von 1000 N bis 5000 N.

Die Hydraulikkammer 10 dient zur Kompensation langsamer Längenänderungseffekte, zum Beispiel thermisch oder durch Alterungs- und Setzeffekte des Aktors 8 hervorgerufener langsamer Längenänderungen (typische Zeitdauer t > 1 s), der Antriebseinheit und der Ventilnadel 3 gegenüber dem Gehäuse 1.

Tritt eine langsame Längenänderung auf, so kann über die beiden Passungen 11,12 des Hydraulikkolbens 10 ein ungehinderter Austausch von Fluid zwischen der Hydraulikkammer 13 und der Fluidzuleitung 7 stattfinden. Die langsame Längenänderung wird somit durch eine Änderung der Höhe hk der Hydraulikkammer 13 abgefangen. Dazu müssen die Passungen 11,12 des Hydraulikkolbens 10 so eng bemessen sein, daß innerhalb einer typischen Einspritzzeit (0 ms < t < 5 ms) kein nennenswerter Austausch von Fluid zwischen der Hydraulikkammer und den daran angeschlossenen druckbeaufschlagten Volumina stattfinden kann.

Praktischerweise sollte sich die Höhe hk der Hydraulikkammer bei einem schnellen Stellvorgang lekkagebedingt maximal um ca. 1 μm bis 2 μm ändern.

Damit das Ventil geöffnet, bis zu t < 5 ms offen gehalten und dann geschlossen werden kann, ist eine mittlere Kraft auf die Ventilnadel 3 von ca. 100 N bis 200 N erforderlich. Bei einer typischen druckwirksamen Fläche Ak des Hydraulikkolbens 10 an der Hydraulikkammer 13 mit

$$Ak = \Pi \cdot (d3^2 - d4^2) / 4$$

von $Ak \approx 242$ mm$^2$ ($d_3 = 18$ mm, $d_4 = 4$ mm), ändert sich der mittlere Druck in der Hydraulikkammer 13 gegenüber dem Druck des angelieferten Fluids um $\Delta p = 200$ N/$A_K < 10$ bar. Der Fluidstrom QL durch die als maximal exzentrisch liegenden Passungen am Hydraulikkolben 10 berechnet sich gemäß

$$QL = 2,5 \cdot \Pi \cdot (d3+d4) \cdot hp^3 \cdot \Delta p / (12 \, \eta \, l),$$

mit Viskosität $\eta$ von Benzin: $\eta = 0,4$ mPA $\cdot$ s, Spalthöhe: $hp = 2$ $\mu$m; Länge l der Dichtflächen: $l = 10$ mm; Einspritzzeit: $t = 5$ ms, woraus sich QL = 28,8 mm$^3$/s, $\Delta V = QL \cdot \cdot 5 \cdot 10^{-3}$ s = 0,144 mm$^3$, $\Delta x = \Delta V/A_K = 0,6$ $\mu$m Hubverlust des Ventils aufgrund der Leckageströmung, ergibt.

Die Hydraulikkammer 13 besitzt aufgrund der Kompressibilität von Benzin eine Federwirkung, welche ebenfalls zu einem Verlust im Ventilhub führt. Die minimale Federrate Ck der Hydraulikkammer 13 berechnet sich gemäß

$$Ck = Ak \cdot (\chi \cdot hk)$$

mit $\chi = 10^{-9}$ m$^2$/N; hk = 500 $\mu$m zu: Ck = 500 N/$\mu$m, $\Delta x = \Delta F/C_K = 0,4$ $\mu$m Hubverlust des Ventils aufgrund der Kompressibilität des Fluids, hier: Benzin, ergibt.

Daraus folgt, daß der maximal zulässige Hubverlust, der durch die Einführung der Hydraulikkammer 13 verursacht wird, hinreichend klein bleibt.

Mit Hilfe des Durchmessers d1 des fünften Bohrungsabschnittes 175, der der Dichtlinie des Tellerventils 4 entspricht und dem hydraulischen Durchmesser d5 des zweiten Metallbalgs 14, läßt sich additiv zu einer Rückstellkraft FR des Federelements 5 eine durch den Druck pK des Fluids verursachte Kraft

$$FS = pK \cdot \Pi \cdot (d5^2 - d1^2)/4$$

zwischen Ventilsitz 2 und Ventilteller 4 einstellen. Insgesamt bilden die Antriebseinheit mit dem Hydraulikkolben 10 und der Ventilnadel 3 eine Einheit, welche als Ganzes bei einer langsamen Bewegung nahezu ungehindert gegenüber dem Gehäuse 1 verschiebbar ist, bis sich die Sitzkraft FR + FS zwischen Ventilsitz 2 und Ventilteller 4 wieder einstellt.

Zur Initiierung des Einspritzvorgangs wird der Niedervolt-Vielschicht-Piezoaktor 8 über die elektrischen Anschlüsse 15 aufgeladen. Aufgrund des inversen piezoelektrischen Effekts dehnt sich der Piezoaktor 8 dabei mit einer typischen Auslenkung zwischen 30 $\mu$m und 60 $\mu$m. Aufgrund des schnellen Stellvorgangs innerhalb einer Zeitdauer von 5 ms wirkt die Hydraulikkammer 13 abstützend, so daß die Elongation des Piezoaktors 8 fast vollständig in eine Verschiebung der Ventilnadel 3 umgesetzt wird. Durch die Verschiebung der Ventilnadel 3 hebt sich der Ventilteller 4 vom Ventilsitz 2 ab und es tritt Benzin aus der Dosieröffnung aus.

Zur Beendigung des Einspritzvorgangs wird der Piezoaktor 8 wieder entladen und dadurch kontrahiert. Die hydraulische Druckvorspannung, die mechanische Druckvorspannung durch den vorgespannten Metallbalg 8 sowie das Federelement 5 ziehen den Ventilteller wieder dichtend in den Dichtsitz 2.

Der größte Beitrag zur Rückstellkraft kommt von der hydraulischen Druckvorspannung des Piezoaktors 8. Die Hydraulikkammer 13 ist aufgrund ihrer hohen Steifigkeit und des hohen Kraftstoffdrucks (pK = 100 bis 300 bar) in der Lage, kurzfristig auch hohe Zugkräfte $FZ = pK \cdot \Pi (d3^2 - d4^2)4 \approx 1000$ N bis 5000 N, ohne eine nennenswerte Änderung der Kammerhöhe hk aufzunehmen. Damit kann die Dosiervorrichtung ca. 5 bis 10 Mal schneller schließen, als dies bei einer gewöhnlichen Rückstellung durch eine Rückstellfeder möglich ist. Gleichzeitig wird ein Verlust im Hub der Ventilnadel 3, welcher durch eine Dehnung der Ventilnadel 3 aufgrund einer hohen durch eine Rückstellfeder aufgebrachten Rückstellkraft bedingt werden, vermieden.

Eine langsam ablaufende Längenänderung, typischerweise t > 1 s, wird günstigerweise, wie oben beschrieben, über die Hydraulikkammer 13 abgefangen. Somit ist über alle Betriebszustände und thermischen Lasten hinweg ein zeitlicher Verlauf des Hubs der Ventilnadel 3 reproduzierbar und damit eine Einspritzmenge steuerbar.

Bei dieser Dosiervorrichtung wird vorteilhafter eine Erzeugung von Spaltflächen und der damit verbundenen Spaltverluste im Ventilnadelantrieb vermieden.

Auch vorteilhaft ist die standfeste hermetische Abdichtung des Aktors 8 mit Hilfe eines Metallbalgs 9, durch den der Piezoaktor 8 gegenüber dem Kraftstoff hermetisch abgedichtet wird.

Sehr vorteilhaft ist ebenfalls das hydraulische Aufbringen der Druckvorspannung gegenüber einer ausschließlich durch ein Federelement 5 aufgebrachten Druckvorspannung, beispielsweise mittels einer Rohrfeder, weil die hydraulische Druckvorspannung keinen Verlust in der Auslenkung des Piezoaktors 8 verursacht. Die hydraulische Kraft hängt nicht von der Auslenkung des Piezoaktors ab.

Es gilt mit $l_0$ = Leerlauf-Auslenkung des Piezoaktors 8 beim elektrischen Aufladen, $C_A$ = Steifigkeit des Piezoaktors 8 mit einer typischen Federkonstante zwischen 12 N/$\mu$m und 50 N/$\mu$m, $C_V$ = Steifigkeit der Aktor-Druckvorspannung (hydraulisch 0 N/$\mu$m, mit Rohrfeder beispielsweise 1 N/$\mu$m bis 5 N/$\mu$m, daß die Auslenkung des Antriebselements beim elektrischen Aufladen des Piezoaktors 8 gegenüber der Leerlaufauslenkung zu $I = I_0 \cdot C_A/(C_A+C_V)$ verändert wird.

Weiterhin vorteilhaft ist die Kompensation bzw. die gezielte Einstellbarkeit der druckbedingten Kräfte auf die Ventilnadel 3, beispielsweise durch eine Dimensionierung der am Hydraulikkolben 10 vorhandenen ersten Passung 11 und zweiten Passung 12.

Durch einen Einbau eines Rückschlagventils in der Fluidzuleitung 7 kann der Druck pK im in der Arbeitskammer 16 auch dann für eine längere Zeit aufrechterhalten werden, wenn der von außen angelegte Druck abfällt, beispielsweise wenn eine Hochdruckpumpe abgeschaltet ist. Beim erneuten Hochfahren der Dosiervorrichtung dient dann das druckbeaufschlagte Volumen innerhalb der Dosiervorrichtung selbst als Druckreservoir für die ersten Dosiervorgänge, bis der nötige Druck in die Dosiervorrichtung eingespeist worden ist.

**Patentansprüche**

1. Dosiervorrichtung, aufweisend

   - ein Gehäuse (1) mit einer Dosieröffnung, die mittels einer Verschiebung einer Ventilnadel (3) steuerbar ist,
   - einen in axialer Richtung längenveränderbaren elektromechanischen Aktor (8), der innerhalb einer druckbefüllbaren Arbeitskammer (16) des Gehäuses (1) angebracht ist, und der an seiner einen Stirnseite mit der Ventilnadel (3) und an seiner anderen Stirnseite mit einem axialverschiebbaren Hydraulikkolben (10) verbunden ist,
   - eine Hydraulikkammer (13), die durch eine erste Passung (11) zwischen Hydraulikkolben (10) und Gehäuse (1) mit der Arbeitskammer (16) gedrosselt hydraulisch verbunden ist, wobei die erste Passung (11) so ausgelegt ist, daß bei einer schnellen Längenänderung des Aktors (8) der Hydraulikkolben (10) relativ zum Gehäuse (1) feststeht,

   **dadurch gekennzeichnet**, **daß**
   die Hydraulikkammer (13) durch die erste Passung (11) hindurch über die Arbeitskammer (16) druckbefüllbar ist.

2. Dosiervorrichtung nach Anspruch 1, bei der der elektromechanische Aktor (8) ein Vielschicht-Piezoaktor ist.

3. Dosiervorrichtung nach einer der vorhergehenden Ansprüche, bei der der Aktor (8) durch eine in axialer Richtung flexible Ummantelung von der Arbeitskammer (16) hydraulisch getrennt ist.

4. Dosiervorrichtung nach Anspruch 3, bei der die Ummantelung ein Metallbalg (9) ist, wodurch zwischen Aktor (8) und Metallbalg (9) ein druckloser oder nur unter einem geringen Druck stehender Aktorraum gebildet wird.

5. Dosiervorrichtung nach einem der vorhergehenden Ansprüche, bei der der Hydraulikkolben (10) in einer gestuften Bohrung axialverschiebbar angeordnet ist, wobei er

   - im Bohrungsabschitt mit weiterem Durchmesser durch die erste Passung führbar ist,
   - im Bohrungsabschitt mit reduziertem Durchmesser durch eine weitere Passung (12) mit dem Gehäuse (1) führbar ist, wobei die Hydraulikkammer (13) zusätzlich durch die weitere Passung (12) druckbeaufschlagbar ist.

6. Dosiervorrichtung nach Anspruch 5, bei der

   - der elektromechanische Aktor (8) ein Vielschicht-Piezoaktor ist,
   - die Ventilnadel (3) über eine Bodenplatte (6) mit der ersten Stirnseite des Aktors (8) verbunden ist, wobei die Dosieröffnung mittels der Ventilnadel (3) von Außen durch Aufsatz von Außen dichtend verschließbar ist,
   - der Aktor (8) innerhalb eines in axialer Richtung flexiblen Metallbalgs (8) untergebracht ist, welcher an der Bodenplatte (6) und am Hydraulikkolben (10) dichtend befestigt ist.

7. Dosiervorrichtung nach Anspruch 6, bei der in der Arbeitskammer (16) ein Federelement (5) angebracht ist, durch das eine Druckspannung auf den Vielschicht-Piezoaktor ausübbar ist.

8. Dosiervorrichtung nach einer der vorhergehenden Ansprüche, bei der eine axiale Höhe (hk)der Hydraulikkammer zwischen 100 µm und 500 µm beträgt.

9. Verfahren zum Betreiben einer Dosiervorrichtung gemäß Anspruch 6 oder 7, bei dem

   - zur Dosierung von Fluid der Vielschicht-Piezoaktor durch Anlegen eines elektrischen Signals in axialer Richtung so schnell gedehnt wird, daß er von der Hydraulikkammer (13) abgestützt wird, und durch die Dehnung des Vielschicht-Piezoaktors die Ventilnadel (3) von der Dosieröffnung abgehoben wird, so daß Fluid aus der Dosieröffnung gesteuert abgebbar ist,
   - zur Beendigung des Dosiervorgangs der Vielschicht-Piezoaktor entladen wird und mindestens durch die Zugspannung des Metallbalgs (9) und den Druck (pK) des Fluids in der Arbeitskammer (16) kontrahiert wird, wodurch die Ventilnadel (3) wieder dichtend von Außen auf die Dosieröffnung aufsetzt und die Abgabe von Fluid beendet wird.

# FIG 1

# FIG 2A

# FIG 2B